(19) Europäisches Patentamt / European Patent Office / Office européen des brevets

(11) **EP 3 606 634 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **18716093.2**

(22) Anmeldetag: **26.02.2018**

(51) Int Cl.:
**B01D 15/38** *(2006.01)*      **G01N 30/60** *(2006.01)*
**B01D 35/06** *(2006.01)*      **B01D 15/18** *(2006.01)*
**B03C 1/033** *(2006.01)*      **B03C 1/034** *(2006.01)*
**B03C 1/28** *(2006.01)*

(86) Internationale Anmeldenummer:
**PCT/EP2018/000075**

(87) Internationale Veröffentlichungsnummer:
**WO 2018/184713 (11.10.2018 Gazette 2018/41)**

(54) **VORRICHTUNG UND VERFAHREN ZUR SELEKTIVEN FRAKTIONIERUNG VON FEINSTPARTIKELN**

DEVICE AND METHOD FOR THE SELECTIVE FRACTIONATION OF ULTRAFINE PARTICLES

DISPOSITIF ET PROCÉDÉ DE FRACTIONNEMENT SÉLECTIF DE PARTICULES FINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2017 DE 102017107089**

(43) Veröffentlichungstag der Anmeldung:
**12.02.2020 Patentblatt 2020/07**

(73) Patentinhaber: **Karlsruher Institut für Technologie 76131 Karlsruhe (DE)**

(72) Erfinder:
• **FRANZREB, Matthias**
  **76185 Karlsruhe (DE)**
• **EBELER, Moritz**
  **82515 Wolfratshausen (DE)**
• **TSCHÖPE, André**
  **76131 Karlsruhe (DE)**

(56) Entgegenhaltungen:
WO-A1-2011/154178      WO-A1-2012/122627
WO-A1-2017/199031      WO-A2-2005/113101
US-A1- 2011 163 039

EP 3 606 634 B1

**Beschreibung**

Die Erfindung betrifft eine Vorrichtung und ein Verfahren zur selektiven und vorzugsweise zugleich kontinuierlichen Fraktionierung von Feinstpartikeln.

Die selektive Fraktionierung von Feinstpartikeln im industriellen Maßstab stellt eine große Herausforderung dar, die bisher nur ansatzweise gelöst werden konnte. Insbesondere im Bereich der kontinuierlichen Fraktionierungsprozesse existieren bisher keine Verfahren, die Partikel kleiner als 1 $\mu$m mehrdimensional und mit engen Trenngrenzen fraktionieren. Interessanterweise gilt diese Einschränkung nicht mehr, wenn man in der Größenordnung bis auf den molekularen Maßstab hinab geht.

Für echt gelöste Ionen und Moleküle existieren verschiedene Verfahren, die eine effiziente Fraktionierung im industriellen Maßstab erreichen.

Zu den effektivsten Verfahren für gelöste Moleküle zählt die Flüssigchromatografie, die aufgrund der realisierbaren hohen Anzahl an Trennstufen und der Vielfalt der verfügbaren Wechselwirkungsmechanismen (z.B. Ionenaustausch, Hydrophobe Interaktion, Größenausschluss etc.) für nahezu alle Substanzklassen sehr gute Trennergebnisse erzielt. Weiterentwickelt eignen sich diese grundsätzlich auch als kontinuierliche Verfahren.

Beispielhaft für ein kontinuierliches Chromatografieverfahren wird der sogenannte Simulated Moving Bed **(SMB)** Prozess **[1]** angeführt, bei dem eine gegenläufige Bewegung einer stationären und einer mobilen Phase durch die Unterteilung der stationären Phase auf mehrere Trennsäulen (z.B. mindestens vier) und die reale Bewegung dieser Säulen über eine Karussellkonstruktion bzw. die simulierte Bewegung durch zyklische Ventilschaltungen dargestellt wird. Durch eine genaue Abstimmung der Strömungsgeschwindigkeiten und der Schaltzeiten des Säulenwechsels gelingt durch die Anwendung des Gegenstromprinzips eine kontinuierliche Trennung der Substanzen im Zulauf in einen sog. Extrakt sowie einen Raffinatablauf, wobei je nach Auslegung eine nahezu vollständige Separation eines Zweikomponentengemischs erreicht wird. Ein SMB-Verfahren und eine dazu gehörige Vorrichtung sind beispielsweise in WO 2011/154178 A1 offenbart.

Im Falle von Gemischen mit mehr als zwei Produktklassen sind komplexere Verschaltungen mit zahlreichen Trennsäulen bekannt, die auch in diesem Fall zu einer vollständigen Auftrennung der Komponenten führen. Entsprechende SMB-Prozesse zur Trennung von Aromaten werden z.B. durch die Firma Honeywell-UOP aktuell mit Durchsätzen bis zu 150 m$^3$/h realisiert.

Bisher ist der Einsatz von SMB-Verfahren auf gelöste Substanzen beschränkt, da die Wechselwirkungen zwischen den Substanzen und der stationären Phase direkt an der Feststoffoberfläche stattfinden und z.B. elektrostatischer oder hydrophober Natur sind. Eine teilweise Ausnahme bildet die Nutzung der Größenausschlusschromatografie, d.h. die Erzielung unterschiedlicher Retentionszeit innerhalb der Teilsäulen aufgrund der Abhängigkeit der Porenzugänglichkeit von der Molekül bzw. Partikelgröße. Durch den diffusionsabhängigen Trennmechanismus innerhalb poröser stationärer Phasen ist der Prozess der Größenausschlusschromatografie jedoch sehr langsam und mit einer Verdünnung der Substanz- bzw. Partikelkonzentration der Ausgangprobe verbunden

Ferner sind Vorrichtungen zu erwähnen, die ermöglichen, magnetische Partikeln mit Hilfe von Magneten aus einer Suspension zu trennen, siehe z.B. WO 2017/199031 A1 und WO 2005/113101 A2.

Davon ausgehend liegt eine **Aufgabe der Erfindung** darin, eine Vorrichtung und ein Verfahren vorzuschlagen, das eine selektive Fraktionierung von Feinstpartikeln ermöglicht und die vorgenannten Einschränkungen reduziert.

Die Aufgabe wird durch eine Vorrichtung und ein Verfahren mit den Merkmalen des ersten bzw. zwölften Patentanspruchs gelöst. Hierauf rückbezogene Unteransprüche geben vorteilhafte Ausgestaltungen wieder.

Zur Lösung der Aufgabe wird eine Vorrichtung zur selektiven Fraktionierung von Feinstpartikeln vorgeschlagen, aufweisend mindestens drei, vorzugsweise mindestens vier, fluidisch durch Verbindungsleitungen in Reihe verbunden und in einer vorgegebenen Durchströmungsrichtung fluidisch durchströmbarer Trennsäulen. Vorzugseise sind die über die fluidisch verbindenden Verbindungsleitungen in Reihe verbunden Trennsäulen als Ring zu einem fluidischen Kreislauf verschaltet.

Die Trennsäulen sind vorzugsweise vertikal angeordnet und weisen jeweils oben und unten einen Anschluss für die Verbindungsleitung auf. Vorzugsweise verbinden die Verbindungsleitungen jeweils einen oberen und einen unteren Anschluss jeweils benachbarter Trennsäulen. Vorzugsweise verläuft die vorgenannte Durchströmungsrichtung von oben nach unten durch die Trennsäulen. Vorzugsweise sind alle dieser Trennsäulen identisch, insbesondere in ihren geometrischen Abmessungen insbesondere der durchströmbaren Innenvolumina, der Ausgestaltung und der Ausrichtung zur Vertikalen identisch. Weiter bevorzugt sind auch alle dieser Verbindungsleitungen zwischen den Trennsäulen identisch, insbesondere in ihren geometrischen Abmessungen insbesondere der durchströmbaren Innenvolumina, der Ausgestaltung und der Ausrichtung zur Vertikalen identisch.

Der grundsätzliche Aufbau der Vorrichtung mit fluidisch über Verbindungsleitungen hintereinander geschalteten Trennsäulen ähnelt damit einem Aufbau zur Durchführung eines kontinuierlichen Chromatografieverfahrens, z.B. dem vorgenannten Simulated Moving Bed (SMB) Prozess.

Ein wesentliches Merkmal umfasst die mindestens eine Magnetfeldquelle zur Erzeugung eines Magnetfeldes in jeder Trennsäule. Magnetfeldquellen werden im Rahmen der Erfindung durch Permanentmagnete oder Elektromagnete jeweils mit mindestens einer elektromagnetischen Spule gebildet. Wesentlich ist, dass mindestens eine (vorzugsweise zumindest die stromabwärts und/oder stromaufwärts zur Einleitung der Feinstpartikelsuspension gelegenen Trennsäulen), vorzugsweise jede Trennsäule für sich oder gemeinsam mit anderen mit einem Magnetfeld beaufschlagt werdenkann, entweder bevorzugt jeweils durch eine separate Magnetfeldquelle für jede Trennsäule separat oder alternativ durch eine oder mehrere gemeinsame Magnetfeldquellen für zwei oder mehrere Trennsäulen. In einer Ausgestaltung ist die Feldstärke in jeder Trennsäule individuell einstellbar. Damit wird ein zusätzlicher Freiheitsgrad für eine Einstellung einer optimierbaren Verfahrensführung ermöglicht. Vorzugsweise sind jedoch die Magnetfeldquellen und damit die maximal einstellbare Magnetfeldstärke in jeder Trennsäule gleich, d.h. in Stärke, Verteilung und Ausrichtung identisch oder sind für alle Trennsäulen simultan veränderbar. Veränderbare Magnetfeldquellen sind vorzugsweise direkt ansteuerbare Elektromagnete und/oder in ihren Positionen zur Trennsäule veränderbare Permanentmagnete, vorzugsweise mit einer motorischen Positionierung. Eine optionale Ausgestaltung sieht eine veränderbare Magnetfeldquelle vor, die Magnetfeldstärken mit einem zyklischen Verlauf, z.B. einem sinusförmigen Wechselfeld, ermöglichen. Veränderbare Magnetfeldquellen erlauben eine optimale Wahl der Magnetfeldstärke in jeder Trennsäule, wodurch gegenüber dem bekannten SMB-Prozess ein zusätzlicher Freiheitsgrad der Prozessführung erreicht wird. Hierdurch wird die beim bekannten SMB-Prozess vorliegende enge Kopplung zwischen dem Säulenverhalten und der Durchströmungsgeschwindigkeit aufgehoben.

Ähnlich wie bei einer vorgenannten SMB umfasst die Vorrichtung ferner

- mindestens einen vor jeder Trennsäule liegenden Zulauf in die Verbindungsleitung mit jeweils mindestens zwei alternativ betriebenen Einmündungen für eine aufzutrennende Feinstpartikelsuspension sowie mindestens eine zusätzliche mobile Phase sowie
- mindestens einen nach jeder Trennsäule aus der Verbindungsleitung abzweigenden Ablauf mit jeweils mindestens zwei alternativ betreibbaren Ausmündungen für je eine Suspension aus Feinstpartikeln, wobei die Feinstpartikel der ersten Ablaufsuspension eine stärkere Wechselwirkung mit der Packung der Trennsäule aufweisen als die Feinstpartikel einer zweiten Ablaufsuspension.

Eine bevorzugte Ausgestaltung sieht die vorgenannten Zu- und Abläufe jeweils als singulären ein- bzw. ausmündenden Kanal in die jeweilige Verbindungleitung vor. Vorzugsweise sind für jede der Verbindungsleitungen je ein Zulauf und je ein Ablauf vorgesehen.

Die vorgenannten beiden Einmündungen für eine aufzutrennende Feinstpartikelsuspension sowie mindestens eine zusätzliche mobile Phase münden dabei in den Kanal des Zulaufs ein. Ferner sind für die Feinstpartikelsuspension und die mobile Phase fluidische vorzugsweise Verteilerleitungen vorgesehen, aus denen Fluidkanäle zu den Einmündungen ausmünden.

Die vorgenannten Ausmündungen für je eine Suspension aus Feinstpartikeln in vorzugsweise unterschiedlichen Anteilen zweigen aus dem Kanal des Ablaufs ab, wobei die Feinstpartikel der ersten Ablaufsuspension eine stärkere Wechselwirkung mit der Packung der Trennsäule aufweisen als die Feinstpartikel einer zweiten Ablaufsuspension. Vorzugsweise wird jede dieser Suspensionen jeweils über die Ausmündungen aus den Ausläufen in jeweils eine fluidische Sammelleitung weitergeleitet.

Die genannten Feinstpartikel weisen eine bevorzugte Partikelgröße zwischen 1 nm, weiter bevorzugt 10 nm, und 20 pm, weiter bevorzugt 5 pm, auf. Sie sind damit kolloidale Feinstpartikel und erstrecken sich über zumindest wesentliche Größenbereiche von Nanopartikeln mit Partikelgrößen zwischen 1 nm bis 1000 nm.

Die aufzutrennende Feinstpartikelsuspension umfasst vorzugsweise ferro-, ferri- oder paramagnetische Feinstpartikel und eine schwächer als die Feinstpartikel paramagnetische oder diamagnetische Lösung als Flüssigkeit. Eine alternative optionale Gestaltung der aufzutrennenden Feinstpartikelsuspension sieht dagegen Feinstpartikel in einem stärker als diese paramagnetischen, ferromagnetischen oder ferrimagnetischen Fluid, d.h. genau den umgekehrten Fall, vor. In diesem Fall umfasst oder ist das Fluid eine paramagnetische Lösung oder ein Ferrofluid. Beide Ausgestaltungen der Feinstpartikelsuspension ermöglichen damit eine unterschiedliche magnetische Krafteinwirkung auf die Partikel und die Lösung, eine Grundvoraussetzung für eine magnetische Trennbarkeit dieser Suspensionsbestandteile.

Es liegt aber im Rahmen der Erfindung, die Zu- und/oder Abläufe optional jeweils als mehrere ein- bzw. ausmündender Kanäle in die jeweilige Verbindungleitung vorzusehen. Ebenso liegt es im Rahmen der Erfindung, die Zu- und/oder Abläufe mit den Ein- bzw. Ausmündungen in einem Punkt zusammenzulegen oder die Zu- und/oder Abläufe direkt in die Verbindungsleitung münden zu lassen, d.h. die Zu- und/oder Abläufe bilden die Ein- bzw. Ausmündungen. Bei beiden dieser Ausgestaltungen mündet eine Ein- bzw. Ausleitung nicht zwingend an einem Punkt in die jeweilige Verbindungsleitung, sondern lässt sich in für insbesondere eine Einmischung vorteilhafter Weise auf einen größeren Bereich in der Verbindungsleitung verteilen.

An jeder Ein- und Ausmündung sind Absperrventile mit jeweils zwei Schaltstellungen, einer Sperrschaltstellung (kein Durchlass) und einer Durchlassschaltstellung (Durchlass) vorgesehen. Jedes Absperrventil ist entweder nur in Sperrschaltstellung oder Durchlassschaltstellung schaltbar, wobei der Durchfluss in einer bevorzugten Ausgestaltung regelbar ist. Dies erfolgt beispielweise über ein im Durchfluss in Durchlassschaltstellung regelbare Drosselfunktion oder durch vor oder hinter dem jeweiligen Absperrventil geschaltete aktive Fördermittel, z.B. eine Pumpe, alternativ durch eine regelbare separate Drosselanordnung. Zur Ansteuerung der Absperrventile sind Ansteuerungsmittel vorgesehen, vorzugsweise eine Prozessrechnergesteuerte Prozessleitstelle, die nicht nur die Absperrventile, sondern auch andere verstellbare Elemente der Vorrichtung, beispielsweise die Magnetfeldquellen, steuert.

Vorzugsweise liegen die Mündungen der vorgenannten Zuläufe oder Einmündungen in die jeweiligen Verbindungsleitungen zwischen jeweils zwei Trennsäulen in Durchströmungsrichtung stromabwärts zu den Mündungen der vorgenannten Abläufe oder Ausmündungen aus den jeweiligen Verbindungsleitungen. Vorzugsweise sind alle Mündungen wie alle Verbindungsleitungen zwischen den Trennsäulen, vorzugsweise auch die Zuläufe, Abläufe sowie der Ein- und Ausmündungen mit den jeweiligen Absprerrventilen identisch, insbesondere in ihren geometrischen Abmessungen insbesondere der durchströmbaren Innenvolumina und der Ausgestaltung und der Strömungsführung identisch.

Die vorgenannten Ansteuerungsmittel sind vorzugsweise für eine simultane Umschaltung der Durchlassschaltstellungen der Absperrventile der Einmündungen sowie der Ausmündungen vorgesehen, wobei jeweils immer mindestens eine Einmündung oder mindestens eine Ausmündung für die aufzutrennende Feinstpartikelsuspension, der mindestens einen zusätzlichen mobilen Phase sowie der mindestens zwei Ablaufsuspensionen aus Feinstpartikeln auf Durchlassschaltstellung schaltbar sind. Ergänzend hierzu sind die Ansteuerungsmittel ergänzend hierzu oder alternativ für die Ansteuerung, Einstellung und Verändern der Magnetfeldstärken der Magnetfelder in den Trennsäulen heranziehbar, realisierbar z.B. durch eine Ansteuerung von die Magnetfelder erzeugenden Elektromagnete oder z.B. motorisch verstellbare Permanentmagneten vorzugsweise an den Trennsäulen.

Die Umschaltung der Absperrventile zwischen der Durchlassschaltstellung und der Sperrschaltstellung der Ein- und Ausmündungen erfolgt vorzugsweise synchron, wobei

- zwischen der auf Durchlassschaltstellung geschalteten Ausmündung für die zweite Suspension (zweite Ablaufsuspension) aus Feinstpartikel und der stromaufwärts zu dieser auf Durchlassschaltstellung geschalteten Einmündung für die aufzutrennende Feinstpartikelsuspension mindestens eine Trennsäule angeordnet ist
- zwischen der auf Durchlassschaltstellung geschalteten Ausmündung für die erste Suspension (erste Ablaufsuspension) aus Feinstpartikel und der stromabwärts zu dieser auf Durchlassschaltstellung geschaltete Einmündung für eine aufzutrennende Feinstpartikelsuspension mindestens eine Trennsäule angeordnet ist, sowie
- zwischen der auf Durchlassschaltstellung geschaltete Ausmündung für die erste Ablaufsuspension aus Feinstpartikel und der stromaufwärts zu dieser auf Durchlassschaltstellung geschalteten Einmündung für eine zusätzliche mobile Phase mindestens eine Trennsäule angeordnet ist.

Vorzugsweise sind jeweils eine Verteilerleitung für eine vorgenannte aufzutrennende Feinstpartikelsuspension sowie mindestens eine vorgenannte zusätzliche mobile Phase vorgesehen, aus denen die vorgenannten Einmündungen ausmünden. Ebenso ist vorzugsweise jeweils eine Sammelleitung für die vorgenannte jeweils eine Suspension aus Feinstpartikeln vorgesehen, wobei die Feinstpartikel der ersten Ablaufsuspension eine stärkere Wechselwirkung mit der Packung der Trennsäule aufweisen als die Feinstpartikel einer zweiten Ablaufsuspension. In die Sammelleitungen münden die jeweiligen vorgenannten Ausmündungen vorzugsweise vollständig aus.

Eine bevorzugte Ausgestaltung der Trennsäulen sieht vor, diese mit jeweils einer durchströmbaren Matrix zu befüllen. Die Durchströmbarkeit erstreckt sich vorzugsweise über das gesamte Volumen der Matrix und weiter bevorzugt in jede Durchströmungsrichtung, womit der Zugang der Fluide in den Trennsäulen, insbesondere des aufzutrennenden Fluids mit den Feinstpartikelmassen über die gesamte Matrix gewährleistet ist. Die Matrix nimmt vorzugsweise das das gesamte Volumen der Trennsäule ein.

Die durchströmbare Matrix wird vorzugsweise durch eine Festbettschüttung aus Füllkörpern, Drähten oder einem Drahtgeflecht gebildet. Weiter bevorzugt sind die Matrix in jeder Trennsäule und/oder die Trennsäulen gleich. Durch diese Matrix ist das Magnetfeld in der Trennsäule grundsätzlich beeinflussbar. Insbesondere werden durch die durchströmbare Matrix in besonders vorteilhafter Weise die Bereiche erhöhter Magnetfeldgradienten wesentlich vergrößert, was wiederum die Effizienz der selektiven Fraktionierung wesentlich verbessert, die erzielbaren Durchsätze erhöht und einer industriellen Anwendung der Vorrichtung und des damit betriebenen Verfahrens sehr entgegenkommt.

Die anströmbaren Oberflächenbereiche der Matrix, insbesondere der Füllkörper der durchströmbaren Festbettschüttung oder Drähte oder des Drahtgeflechts in den Trennsäulen sind vorzugsweise unporös, womit in vorteilhafter Weise eine Ablagerung und/oder Kontamination der Matrix, insbesondere der Füllkörper oder Drähte oder des Drahtgeflechts durch alle Fluidanteile, insbesondere der Feinstpartikelsuspension als Ganzes vermieden oder zumindest reduziert wird.

Die durchströmbare Matrix in den Trennsäulen umfasst ferner vorzugsweise ein magnetisierbares Material oder besteht vorzugsweise aus einem magnetisierbaren Material, womit in vorteilhafter Weise eine selektive Anreicherung von magnetisierbaren Fluidanteile, insbesondere aus der Feinstpartikelsuspension, im Bereich der oberflächennahen Flüssigkeitsschichten ermöglicht wird. Die Wirkung der Magnetfeldquellen auf das Volumen der Matrix erhöht sich damit signifikant. Dabei weist die die Matrix bevorzugt eine Sättigungsmagnetisierung größer gleich 1 A·m$^2$/kg auf, weiter eingeschränkt bevorzugt zwischen 0,7 oder 0,9 und 20 oder 80 A·m$^2$/kg auf.

Eine optionale Ausgestaltung der durchströmbaren Matrix sieht vor, Drähte oder ein Drahtgeflecht aus weichmagnetischem Stahl als Schüttung in die bevorzugt zylindrischen Innenvolumina der Trennsäulen zu integrieren. Die Drähte weisen dabei einen bevorzugten Volumenanteil von 1 oder 2 bis 10 oder 20% und Durchmessern von vorzugsweise ca. 50 bis 200 μm auf. Sie erzeugen damit hohe Feldgradienten und zugleich eine wesentlich erhöhte Oberfläche, in deren angrenzenden Flüssigkeitsbereich bei Durchführung eines Verfahrens mit der Vorrichtung eine Aufkonzentrierung magnetischer Partikel erwartet wird. Bei dieser Ausgestaltung liegt jedoch eine relativ ungeordnete Drahtführung innerhalb der Matrix vor, was wiederum zu unvorhersagbaren Magnetfeldinhomogenitäten führt und die Gefahr von unerwünschter Partikelanlagerungen im Bereich der Adsorptionsoberflächen hervorruft. Infolgedessen ist diese Ausgestaltung in seinem vorgenannten Volumenanteil nach oben hin begrenzt, was wiederum einer angestrebten Reduzierung der Transportwege wiederum entgegensteht.

Eine optionale Ausgestaltung sieht vor, die durchströmbare Matrix durch eine Schüttung von Füllkörper zu realisieren. Die Füllkörper bestehen vorzugsweise aus monodispersen magnetisierbaren Kugeln, vorzugsweise mit Durchmesser zwischen 5 und 10 und 20 oder 50 μm. Idealerweise liegen die Kugeldurchmesser im Bereich zwischen dem 10 und 50-fachen der maximalen Partikeldurchmesser der Feinstpartikelmassen in dem aufzutrennenden Fluid. Kugelschüttungen reduzieren im Vergleich zu Drahtanordnungen die vorgenannten nachteiligen Inhomogenitäten der Matrixanordnung und ermöglichen erfahrungsgemäß eine nahezu ideale Kolbenströmungen (d.h. alle Flüssigkeits-Volumenelemente habe nahezu die gleiche Aufenthaltszeit in der Säule) in Trennsäulen und damit gute Trennergebnisse bei der kontinuierlichen Fraktionierung von Feinstpartikeln. Eine Matrix besteht vorzugsweise aus einer Schüttung aus gleichen, insbesondere gleich großer Kugeln, die als Schüttung mit einen Füllgrad von 60 bis 70% nur geringe freie Volumina für eine permanente Partikelseparation lässt. Dies stellt aber anders als bei einer Hochgradientenmagnetseparation einen Vorteil dar, da keine permanente Partikelseparation sondern nur eine Retardierung während der Durchströmung gewünscht wird und das gesamte Fluidvolumen bei der Durchströmung in engem Kontakt zur Matrixoberfläche steht.

Eine optionale Ausgestaltung sieht eine permanentmagnetische Matrix, vorzugsweise aus Füllkörpern vor, die zugleich auch als Magnetfeldquellen heranziebar ist. Externe Magnetfeldquellen sind je nach Ausgestaltung der Vorrichtung und des damit betreibbaren Verfahrens zur selektiven Fraktionierung von Feinstpartikeln ersetzbar. Durch einen Wegfall der externen Magnetfeldquellen ist auch der erforderliche Bauraum der Vorrichtung reduzierbar.

Die Lösung der eingangs genannten Aufgabe umfasst ebenso ein Verfahren zur selektiven Fraktionierung von Feinstpartikeln mit einer vorgenannten Vorrichtung, vorzugsweise umfassend die folgenden Verfahrensschritte:

- Bereitstellung einer vorgenannten und beschriebenen Vorrichtung, einer flüssigen mobilen Phase sowie der aufzutrennenden Feinstpartikelsuspension.
- Ein serielles Durchleiten der flüssigen mobilen Phase durch die Trennsäulen in Durchströmungsrichtung, d.h. vorzugsweise von oben nach unten durch vertikal aufgestellte Trennsäulen.
- Aktivierung der Magnetfelder in mindestens einer der Trennsäulen.
- Einleiten der aufzutrennenden Feinstpartikelsuspension über den Einlass in die Verbindungsleitung zwischen zwei Trennsäulen. Die Feinstpartikelsuspension wird vorzugsweise über eine Verteilerleitung in die Einmündungen zugeleitet und jeweils nur über die Zuleitungen in den jeweiligen Einlass und/oder in die jeweilige Verbindungsleitung weitergeleitet, in der und solange das Absperrventil auf Durchlassschaltung eingestellt ist.
- simultane zyklische Schaltung der Durchlassschaltstellungen der Absperrventile der Einmündungen sowie der Ausmündungen, wobei jeweils immer nur je eine Einmündung für die Feinstpartikelsuspension und die mobile Phase und je eine Ausmündung für die mindestens zwei fraktionierten Ablaufsuspensionen aus Feinstpartikeln, wobei die Feinstpartikel der ersten Ablaufsuspension eine stärkere Wechselwirkung mit der Packung der Trennsäule aufweisen als die Feinstpartikel einer zweiten Ablaufsuspension, zugleich auf Durchlassschaltstellung schaltbar ist, zwischen der auf Durchlassschaltstellung geschalteten Ausmündung für die zweite Ablaufsuspension aus Feinstpartikel und der stromaufwärts zu dieser auf Durchlassschaltstellung geschaltete Einmündung für die aufzutrennende Feinstpartikelsuspension mindestens eine Trennsäule angeordnet ist, zwischen der auf Durchlassschaltstellung geschalteten Ausmündung für die erste Ablaufsuspension aus Feinstpartikel und der stromabwärts zu dieser auf Durchlassschaltstellung geschalteten Einmündung für die aufzutrennende Feinstpartikelsuspension mindestens eine Trennsäule angeordnet ist, sowie zwischen der auf Durchlassschaltstellung geschalteten Ausmündung für die erste Ablaufsuspension aus Feinstpartikel und der stromaufwärts zu dieser auf Durchlassschaltstellung geschalteten Einmündung für die mobile Phase mindestens eine Trennsäule angeordnet ist.

Im Rahmen einer bevorzugten Ausgestaltung sind auch die Magnetfelder in ihren Magnetfeldstärken durch die Ansteuerungsmittel ansteuerbar und veränderbar.

Eine weitere Ausgestaltung sieht vor, dass die aufzutrennende Feinstpartikelsuspension dia- oder paramagnetischen Feinstpartikel und ein stärker als diese paramagnetisches bzw. ferro- oder ferrimagnetisches Fluid als Flüssigkeit umfasst. In diesem Fall werden Feinstpartikel mit dem größeren Betrag der Suszeptibilitätsdifferenz zwischen Feinstpartikel und Fluid stärker von dem Bereich der Matrixoberfläche verdrängt und daher rascher mit der durchströmenden mobilen Phase mittransportiert. Die Feinstpartikel mit dem größeren Betrag der Suszeptibilitätsdifferenz bilden daher die zweite Ablaufsuspension, die Feinstpartikel mit dem kleineren Betrag der Suszeptibilitätsdifferenz die erste Ablaufsuspension.

Die vorgeschlagenen Lösungen der eingangs genannten Aufgabe haben ihren Ausgangspunkt in der Idee, die Vorteile einer kontinuierlichen Gegenstromchromatografie mit Trennmerkmalen zu verknüpfen, die eine Beeinflussung suspendierter Feinstpartikeln ermöglichen. Als fernwirkende physikalische Wechselwirkungen zwischen z.B. einer partikulären stationären Phase und kolloidalen Feinstpartikeln dienen insbesondere magnetische Kräfte. Aus diesem Grund kommen bei der vorgeschlagenen Lösung magnetische Kräfte als steuerbare, energieeffiziente und weitreichende Wechselwirkung zwischen Feinstpartikeln und einer magnetisierbaren stationären Phase zum Einsatz.

Ausgangspunkt ist der Prozess der Anreicherung magnetischer Nanopartikel in den Fluidbereichen, in denen eine erhöhte magnetische Feldstärke vorliegt. Hierbei ist zu beachten, dass mit der Bewegung eines Partikels in einen Bereich höherer Feldstärke auch die Verdrängung eines entsprechenden Fluidvolumens aus diesem Bereich an die ursprüngliche Partikelposition verbunden ist. Die letztendliche treibende Kraft $F_m$ für eine gerichtete Partikelbewegung ergibt sich somit zu:

$$F_m = \frac{1}{2} \cdot \mu_0 \cdot \Delta\kappa \cdot V_P \cdot \nabla\left(H^2\right) \qquad (1)$$

mit $\Delta\kappa = \kappa_p - \kappa_f$, d.h. der Suszeptibilitätsdifferenz $\Delta\kappa$ zwischen dem Partikel und dem umgebenden Fluid (H = Magnetfeldstärke; $\mu_0$ = magnetische Feldkonstante, $V_p$ = Partikelvolumen). Je nach Suszeptibilitätsdifferenz ist es für die weitere Beschreibung wichtig, dass für diamagnetische oder nur schwach paramagnetische Partikel sowie stark paramagnetische Fluide hierdurch auch

eine Verdrängung von Nanopartikeln aus dem Bereich höherer Feldstärke erfolgen kann.

Der Anreicherungseffekt wird durch das Anlegen eines inhomogenen Magnetfelds in den Trennsäulen genutzt. Wie aus Gleichung (1) erkennbar, spielt für die Magnetkraft dabei neben der absoluten Feldstärke H insbesondere der Gradient der Feldstärke, d.h. das Ausmaß der räumlichen Änderung eine entscheidende Rolle. Aus der Forderung nach Gradienten > 100 T/m lässt sich die Notwendigkeit kleiner Magnetstrukturen und Kanalstrukturen, d.h. kleine Transportwege für die anzureichernden bzw. zu verdrängenden Feinstpartikel ableiten. Zudem müssen die Distanzen über die die Partikel in der Ausgangssuspension (aufzutrennenden Fluid mit Feinstpartikelmassen) in den Trennsäulen wandern müssen kurz gehalten werden, um Dauer zur Einstellung der Konzentrationsanreicherung zu verringern.

Um kurze Transportwege für die Partikelmassen in den Trennsäulen und zugleich große Trennsäulenvolumina für entsprechend große erzielbare Durchsätze zu realisieren, wird eine Nutzung der zuvor beschriebenen magnetisierbaren, durchströmbaren Matrix zur Schaffung hoher lokal Feldgradienten im Bereich eines äußeren, weitgehend homogenen Magnetfelds vorgeschlagen.

Zur Vermeidung einer permanenten Separation von Partikelmassen an den Matrixoberflächen aufgrund zu hoher Magnetkräfte, wird das äußere Magnetfeld so eingestellt, dass es zu einer lokalen Partikelanreicherung im Fluidbereich in der Nähe der Matrix kommt, jedoch die Grenze zur Ausbildung kompakter Anlagerungen nicht überschritten wird. Die Begrenzung der Partikelanreicherung erfolgt dabei durch die stets vorhandene Brownsche Molekularbewegung, die eine Diffusion der Partikel aus dem Bereich hoher Konzentration in die Bereiche niedriger Konzentration verursacht. In Summe kommt es zu einem dynamischen Gleichgewicht, bei dem für stärker magnetische Feinstpartikel die Aufenthaltswahrscheinlichkeit in der Nähe der magnetisierten Matrix erhöht ist. Da die Strömungsgeschwindigkeit im Bereich der laminaren Grenzschicht um die Matrix zudem verringert ist, resultiert hieraus ein verlangsamter Transport magnetischer Feinstpartikel durch die Säule, d.h. eine Retardation.

Die Erfindung wird anhand von Ausführungsbeispielen, den folgenden Figuren und Beschreibungen näher erläutert. Die dargestellten Merkmale und deren Kombinationen sind nicht nur auf diese Ausführungsbeispiele und deren Ausgestaltungen begrenzt. Vielmehr sind diese stellvertretend für weitere mögliche, aber nicht explizit als Ausführungsbeispiele dargestellte weitere Ausgestaltungen kombinierbar. Es zeigen

**Fig.1** eine prinzipielle Ansicht der Vorrichtung einer beispielhaften Ausgestaltung,

**Fig.2** eine Ausschnittsvergrößerung der Ansicht gemäß **Fig.1** im Bereich einer der Trennsäulen,

**Fig.3** eine vereinfachte Darstellung der in **Fig.1** dargestellten Ansicht der Vorrichtung im Betriebszustand sowie

**Fig.4** eine Darstellung der Erhöhung der Retentionszeit magnetischer Feinstpartikeln in einer magnetfeldüberlagerten Trennsäule durch einen Vergleich der Retentionszeiten von mit der Probe aufgegebenen Tracerionen und der Feinstpartikel im Größenbereich von 50 - 200 nm.

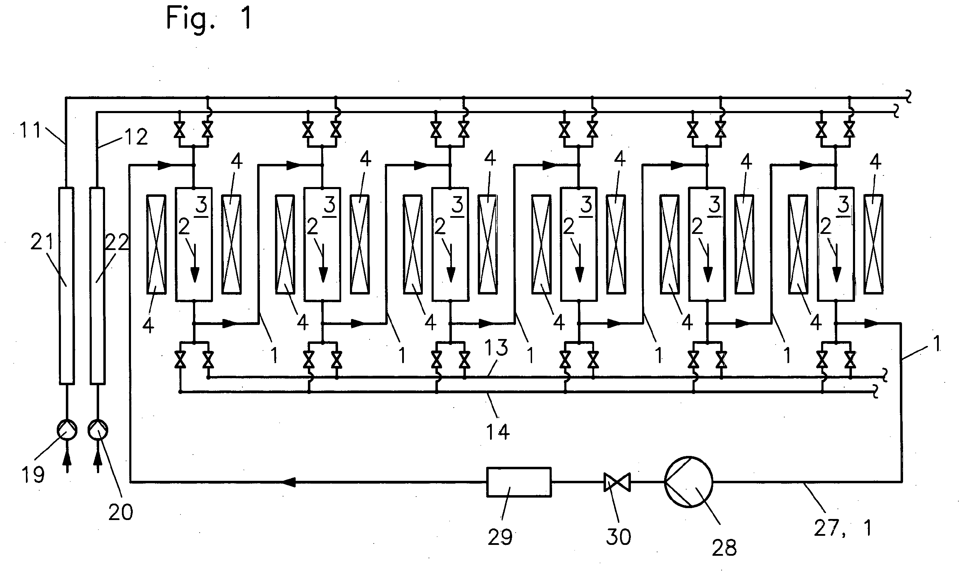

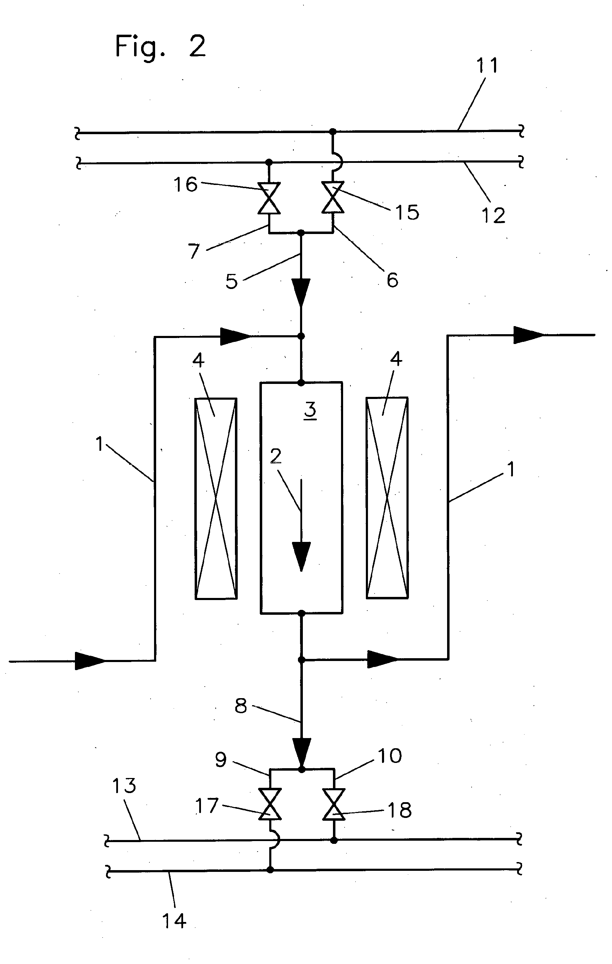

Eine Vorrichtung in der in **Fig.1** dargestellten Ausgestaltung umfasst mindestens drei fluidisch durch Verbindungsleitungen **1** in Reihe verbundene und in einer vorgegebenen Durchströmungsrichtung **2** durchströmbare Trennsäulen **3**. Um jede Trennsäulen ist mindestens eine Magnetfeldquelle **4** für je ein Magnetfeld in jeder Trennsäule vorgesehen. Die dargestellten Magnetfeldquellen sind im Ausführungsbeispiel elektromagnetische Zylinderspulen, alternativ Helmholtzspulen, die jeweils konzentrisch um eine der bevorzugt zylinderförmigen Trennsäulen angeordnet sind. **Fig.2** zeigt eine Ausschnittsvergrößerung von **Fig.1** im Bereich einer der Trennsäulen.

In Durchströmungsrichtung vor jeder Trennsäule **3** münden zudem je ein Zulauf **5** in die Verbindungsleitung **1** mit jeweils mindestens zwei alternativ betriebenen Einmündungen für eine aufzutrennende Feinstpartikelsuspension **6** und für mindestens eine zusätzliche mobile Phase **7** ein. Alle Einmündungen **6** und **7** sind wiederum an je eine Verteilerleitung für die aufzutrennende Feinstpartikelsuspension **11** und für die zusätzliche mobile Phase **12** als jeweils zentrale Zuleitung für die genannten Fluide angeschlossen. Jede Verteilerleitung ist mit einer Förderpumpe **19** und **20** und einem optionalen Vorfilter **21** und **22** ausgestattet

In Durchströmungsrichtung nach jeder Trennsäule **3** und vor dem vorgenannten Zulauf **5** der folgenden Trennsäule zweigt je ein Ablauf **8** mit jeweils mindestens zwei alternativ betreibbaren Ausmündungen **9** und **10** für je eine Ablaufsuspension aus Feinstpartikeln, wobei die durch Ausmündung **9** abgeleiteten Feinstpartikel der ersten Ablaufsuspension eine stärkere Wechselwirkung mit der Packung der Trennsäule aufweisen als die durch Ausmündung **10** abgeleiteten Feinstpartikel einer zweiten Ablaufsuspension, aus der Verbindungsleitung aus. Alle Ausmündungen **9** und **10** sind wiederum an je eine Sammelleitung für erste Ablaufsuspension **13** und die zweite Ablaufsuspension **14** als jeweils zentrale Ableitung für die genannten Suspensionen angeschlossen.

In jeder Einmündung **6** und **7** und jeder Ausmündung **9** und **10** sind jeweils Absperrventile **15, 16, 17** und **18** wie zuvor beschrieben mit jeweils zwei Schaltstellungen, einer Sperrschaltstellung und einer Durchlassschaltstellung vorgesehen. Optional weisen die Absperrventile wie vorbeschriebeneine Drosselfunktion auf. Alternativ oder ergänzend hierzu sind optional vor oder hinter dem jeweiligen Absperrventil geschaltete aktive Fördermittel, z.B. eine Pumpe, alternativ durch eine regelbare separate Drosselanordnung (in **Fig.1 bis 3** nicht weiter dargestellt) vorgesehen. Ebenso nicht weiter dargestellt sind Ansteuerungsmittel für eine simultane Umschaltung der Durchlassschaltstellungen der Absperrventile der Einmündungen sowie der Ausmündungen.

Die Ansteuerungsmittel sind dabei so eingestellt, dass jeweils immer mindestens eine Einmündung und mindestens eine Ausmündung für die aufzutrennende Feinstpartikelsuspension **6,** für die mindestens eine zusätzliche mobile Phase **7** sowie der mindestens zwei Ablaufsuspensionen aus Feinstpartikeln **9** und **10** auf Durchlassschaltstellung schaltbar sind. Optional sind durch die Ansterungsmittel auch die Magnetfelder über die elektromagnetischen Magnetfeldquellen **4** einstellbar.

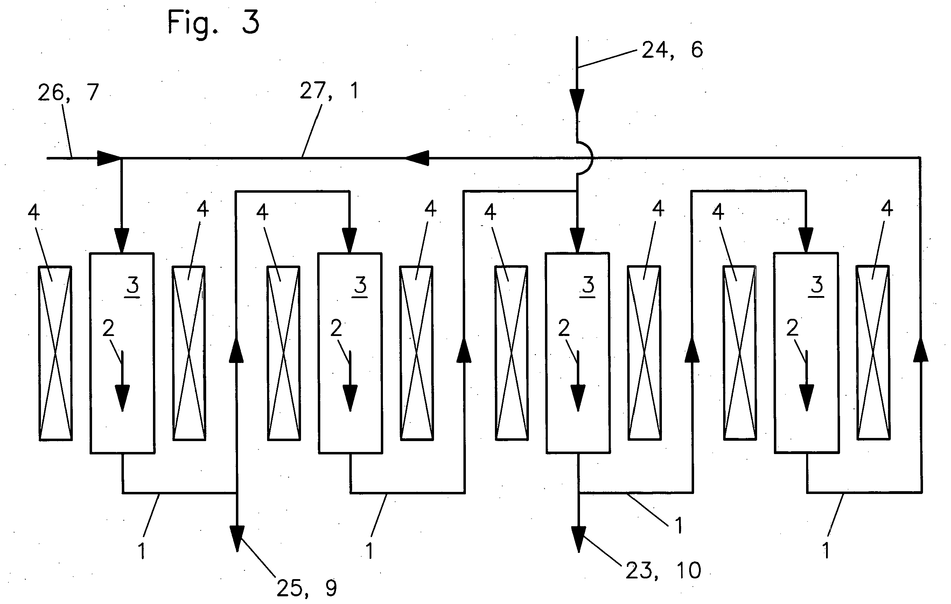

**Fig.3** gibt den Betriebszustand der Vorrichtung, die gegenüber **Fig.1** sehr vereinfacht dargestellt ist, an. Die Leitungen, an denen die Absperrventile auf Sperrschaltstellungen eingestellt sind, sind in Fig.3 nicht dargestellt. Wesentlich für die Durchführung des Verfahrens zur selektiven Fraktionierung von Feinstpartikeln unter Verwendung der Vorrichtung gem. **Fig.1** und **2** ist, dass zwischen der auf Durchlassschaltstellung geschalteten Ausmündung für die zweite Ablaufsuspension **23** aus Feinstpartikel und der stromaufwärts zu dieser auf Durchlassschaltstellung geschalteten Einmündung für die aufzutrennende Feinstpartikelsuspension **24** mindestens eine der Trennsäulen **3** angeordnet ist. Weiterhin ist zwischen der auf Durchlassschaltstellung geschalteten Ausmündung für die erste Ablaufsuspension **25** aus Feinstpartikel und der stromabwärts zu dieser auf Durchlassschaltstellung geschaltete Einmündung für eine aufzutrennende Feinstpartikelsuspension **24** ebenfalls mindestens eine Trennsäule angeordnet. Ferner ist zwischen der auf Durchlassschaltstellung geschaltete Ausmündung für die erste Ablaufsuspension **25** aus Feinstpartikel und der stromaufwärts zu dieser auf Durchlassschaltstellung geschalteten Einmündung für eine zusätzliche zusätzliche mobile Phase **26** ebenso mindestens eine Trennsäule angeordnet.

Ferner existiert zumindest vorzugsweise eine zusätzliche Verbindungsleitung **27,** vorzugsweise - wie in **Fig.1** dargestellt - mit optionaler eigener Förderpumpe **28** und Polizeifilter **29** und Absperrventil **30** (vorzugsweise von der in Durchströmungsrichtung letzten zurück zur ersten der dargestellten Trennsäule dargestellt), womit die Vorrichtung mit den mindestens drei fluidisch durch Verbindungsleitungen in Reihe verbundenen Trennsäulen als Ring zu einem Kreislauf verschaltet werden kann.

Eine Nutzung von mindestens drei, vorzugsweise vier oder sechs (vgl. **Fig.3 bzw. 1**) bis acht Trennsäulen **3** und einer Ventilschaltung (vorgenannte Absperrventile und Ansteuerungsmittel) zur Realisierung eines simulierten Gegenstromprinzips (zeitlich getaktete Umschaltung der durchgeschalteten Ein- und Ausmündungen entgegen der Durchströmungsrichtung analog zu einem Simulated Moving Bed, SMB) zwischen der Trennsäulenanordnung und der durchströmenden Suspensionsmischung ermöglicht eine kontinuierliche Durchführung des Verfahrens und damit eine starke Steigerung des Durchsatzes gegenüber zyklisch arbeitenden Verfahren (Batchverfahren). Zudem ermöglicht eine Volumenstromeinstellung der gegenläufigen Volumenströme der mobilen sowie der stationären Phase eine Fokussierung und damit Aufkonzentrierung des. Zielprodukts im Bereich des durchgeschalteten Ablaufs für die erste und zweite Ablaufsuspension **23** bzw. **25**.

Die Kombination des Trennprinzips der magnetischen Chromatografie mit dicht gepackten Matrices magnetisierbarer Kugeln und der Betriebsweise analog einer SMB-Vorrichtung gemäß des Stands der Technik bietet das Potential einer effizienten Fraktionierung magnetischer Feinstpartikeln im technischen Maßstab.

Die Erfindung wird ferner anhand von weiteren Anwendungsbeispielen und Verwendungen beispielhaft erläutert:

**Anwendungsbeispiel 1:** Aufarbeitung von Poliersuspensionen:

Poliersuspensionen, die z.B. zur industriellen Oberflächennachbearbeitung in der Halbleiterindustrie eingesetzt werden, stellen beispielhaft ein Feinstpartikelsystem dar, das einer aufwändigen Fraktionierung und damit einer Reinigung unterzogen werden müssen. Die Suspensionen bestehen aus einer Trägerflüssigkeit, in die Schleifpartikel (Feinstpartikel) suspendiert sind. Sie dürfen zur Erzielung der erforderlichen Oberflächengüte z.B. in der Halbleiterindustrie keine Partikel größer als eine vorbestimmte Partikelgröße, beispielsweise 50 nm aufweisen, da ansonsten die geforderte Waver-Oberflächengüte nicht erzielbar ist. Grundsätzlich erzeugen alle Schleifpartikel in der Suspension Riefen in der zu bearbeitenden Oberfläche, die in ihrer Größenordnung der Partikelgröße entsprechen. Die bevorzugte Partikelgröße in der Suspension im Anwendungsbeispiel liegt zwischen 5 und 50nm, wobei kleinere Schleifpartikel unter 5 nm, vorzugweise zwischen 1 und 5 nm bei Poliersuspensionen grundsätzlich kein Problem darstellen. Einzelne Überkörner dagegen, d.h. im Beispiel ein Partikel mit einer Partikelgröße über 50 nm generieren dagegen unzulässig große Riefen, womit mit zunehmender Größe die technische Funktionsstruktur der Halbleiteroberflächen zunehmend gestört wird und eine Funktion beeinträchtigt oder unmöglich wird.

Ziel des beanspruchten Verfahrens mit einer beanspruchten Vorrichtung ist es, diese Überkörner selektiv aus der Poliersuspension zu entfernen. Hierzu ist sicherzustellen, dass die selektiv zu erfassenden Schleifpartikel ferro-, ferri- oder paramagnetische Eigenschaften aufweisen, die die der Trägerflüssigkeit übersteigen. Die ferro-, ferri- oder paramagnetischen Eigenschaften der Überkörner sowie deren Verhalten in den Trennsäulen sind von der Partikelgröße und damit auch von der Materialmenge mit den vorgenannten Eigenschaften abhängig, eine Grundvoraussetzung für die selektive Abtrennung von Feinstpartikel oberhalb einer bestimmbaren Größe. Weisen die Schleifpartikel selbst diese Eigenschaften nicht auf (z.B. Korundpartikel etc.), sind diese z.B. mit einer Partikelbeschichtung mit ferro-, ferri- oder paramagnetische Eigenschaften zu funktionalisieren.

**Anwendungsbeispiel 2:** Aufarbeitung von Nanopulver und Nanoaerosolen:

Nanopartikel mit einem durch die weitere Verarbeitung vorgegebenen Eigenschaftsprofil, z.B. der Korngrößen innerhalb von engen Grenzen (Monodispersivität) und/oder der stofflichen Reinheit und/oder der rheologischen Eigenschaften in einer Suspension, dienen als Zwischen- oder Ausgangsprodukt in der Nanotechnologie. Ebenso erfordert die Herstellung von metallischen Kurzfasern im Nanomaßstab, d.h. mit Faserlängen zwischen 1 nm bis 1000 nmn, die ihre Anwendung z.B. in der Solarzellenfertigung finden, ein metallisches Nanoaerosol als Wachstumskerne. Eine Monodispersität der Partikel ist hier Grundvoraussetzung.

Ziel des beanspruchten Verfahrens mit einer beanspruchten Vorrichtung ist es hierbei, Nanopartikel mit dem durch die weitere Verarbeitung vorgegebenen Eigenschaftsprofil aus einer Ausgangssuspension (aufzutrennende Fluid mit Feinstpartikelmassen) zu isolieren. Weisen die Nanopartikel ferro-, ferri- oder paramagnetischen Eigenschaften auf, werden z.B. zunächst in einem ersten Verfahren Partikel oberhalb einer vorgebbaren Größe oder magnetischen Eigenschaft wie im vorgenannten Anwendungsbeispiel entfernt und mit einer der beiden Suspensionen über die Abläufe und mindestens eine der Ausmüdungen der Vorrichtung für eine von zwei abzuleitenden Suspensionen aus der Vorrichung abgeleitet. Die andere über die Abläufe und mindestens eine der Ausmüdungen der Vorrichtung für die jeweilige andere abzuleitenden Suspension enthält neben den zu isolierenden Nanopartikel auch noch andere Nanopartikel, die es im Rahmen eines nachfolgenden zweiten gleichartigen Verfahrens zur selektiven Fraktionierung von Feinstpartikeln der beanspruchten Art zu trennen gilt.

Durch eine mehrfache serielle Anwendung des beanspruchten Verfahrens lässt sich in vorteilhafter Weise in jedem Verfahren ein Anteil der ursprünglich in der Suspension gebundenen Nanopartikel iterativ und selektiv entfernen. Dieses serielle iterative Vorgehen bietet sich nicht nur in der beschriebenen Anwendung, sondern auch grundsätzlich bei Anwendungen an, insbesondere bei denen Partikel mit einem unterschiedlichen und in ihren physikalisch und/oder chemisch abweichenden Eigenschaftsprofil selektiv aus einem aufzutrennende Fluid mit Feinstpartikelmassen abzutrennen sind.

Vorteilhaft bei einer mehrfachen seriellen Anwendung des beanspruchten Verfahrens ist auch die Möglichkeit einer Verwendung unterschiedlicher Trägerflüssigkeiten bei jedem Iterationsschritt. Die Trägerflüssigkeit und die Partikel bilden als Suspension ein System, das je nach zu lösender Aufgabe neu zusammenstellbar ist. Da die Partikel des aufzutrennenden Fluids mit den Feinstpartikelmassen (Ausgangssuspension) zunächst vorgegeben sind, ist eine Beeinflussung nur durch die Auswahl der Flüssigkeit der Ausgangssuspension gegeben. Dabei und auch bei anderen Anwendungen ergeben sich grundsätzlich zwei Ausgestaltungen:

- Verfahren, dadurch gekennzeichnet, dass die aufzutrennende Feinstpartikelsuspension dia- oder paramagnetischen Feinstpartikel und eine stärker als die Feinstpartikel paramagnetische Lösung oder ein Ferrofluid als Flüssigkeit umfasst oder

- Verfahren, dadurch gekennzeichnet, dass die aufzutrennende Feinstpartikelsuspension ferro-, ferri- oder paramagnetische Feinstpartikel und eine schwächer als die Feinstpartikel paramagnetische oder diamagnetische Lösung als Flüssigkeit umfasst.

**Anwendungsbeispiel 3:** Fraktionierung dia- und paramagnetischer Feinstpartikeln:

Magnetische Feinstpartikeln mit enger Größenverteilung sind dabei z.B. wichtiger Bestandteil innovativer Medizinprodukte wie Kontrastmittel oder als Trägerpartikel für die sogenannte Hyperthermie bzw. Drug Targeting.

Auch als Merkmal für fälschungssichere Drucktinten oder als Bestandteil von Hochfrequenzantennen sind magnetische Ferritpartikel mit enger Größenverteilung von Relevanz. Trotz dieser industriellen Relevanz magnetischer Feinstpartikeln besitzt der bei weitem größte Anteil technischer Feinstpartikeln nur dia- oder paramagnetische Eigenschaften, d.h. die direkte Beeinflussbarkeit mittels schwacher bis moderater Magnetfelder ist gering. Wie im Folgenden erläutert, bietet die vorgeschlagene Erfindung in einer modifizierten Form aber auch das Potential zur Fraktionierung dieser Partikel.

Für das Verhalten von Feinstpartikeln in Bereichen mit stark inhomogenen Magnetfeldern ist die Differenz der Suszeptibilitäten des Partikels sowie des umgebenden Fluids entscheidend. Im Falle geringer oder bei diamagnetischen Materialien sogar geringfügig negativer Partikelsuszeptibilitäten lassen sich durch Wahl von Fluiden mit höherer Suszeptibilität dennoch ausreichende Suszeptibilitätsdifferenzen erzielen. Die Partikel werden dabei jedoch nicht im Fluidbereich in der Nähe der Matrixoberfläche angereichert, sondern durch das Fluid höherer Suszeptibilität aus diesem Bereich verdrängt. Als Folge ist das verfügbare Zwischenraumvolumen, d.h. der Raum der nicht von der Matrix eingenommen wird, für diamagnetische Feinstpartikeln reduziert, was eine gegenüber dem Fluid verringerte Retentionszeit zur Folge hat. Als Fluide höherer Suszeptibilität bieten sich zunächst hochkonzentrierte Lösungen stark paramagnetischer Ionen (wie z.B. $Mn^{2+}$) an. Wesentlich höhere Trennkräfte lassen sich aber im Falle der Verwendung stabiler Suspensionen magnetischer Nanopartikel bzw. magnetischer Fluide vorhersagen. Für einen wirtschaftlichen Betrieb ist in allen Fällen sicherlich die Rückgewinnung des Fluids aus dem Suspensionsablauf notwendig. Im Falle echter Lösungen lässt sich dies durch eine klassische Fest-Flüssig-Trennung mit z.B. Filtrationsverfahren erreichen, im Falle magnetischer Nanopartikel bietet sich eine Hochgradienten-Magnetseparation mit feiner Matrix und höheren Hintergrundfeldern an. Ansonsten ist durch die Verwendung von Fluiden hoher Suszeptibilität auch für dia- und paramagnetische Feinstpartikeln eine Fraktionierung mittels magnetischer Gegenstromchromatografie in der beschriebenen SMB-Betriebsweise möglich.

**Anwendungsbeispiel 4:** Fraktionierung magnetische Nanopartikel:

Getestet wurden die Retentionszeiten magnetischer Nanopartikel innerhalb einer mit einer magnetisierbaren Partikelschüttung gefüllten Trennsäule und überlagertem Magnetfeld. Als Magnetfeldquellen dienten sowohl Permanent- als auch Elektromagneten (Zylinderpule oder Helmholtzspule), wobei im Falle des Elektromagneten frequenz- und amplitudenmodulierte Wechselfelder zum Einsatz kamen.

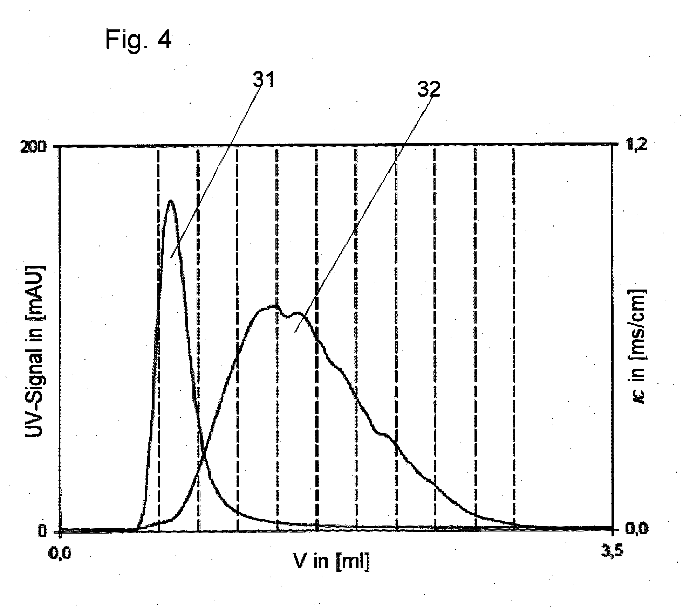

Die verwendete Abscheidematrix in der Trennsäule bestand aus Stahlkugeln mit einem durchschnittlichen Durchmesser von 18 $\mu$m. Mit einer selbst gefertigten Helmholtz-Spule gelang bei magnetischen Flussdichten von nur 10 mT einer starke Erhöhung der Retentionszeiten magnetischer Feinstpartikeln im Bereich von 50 nm bis 400 nm gegenüber den Retentionszeiten gleichzeitig aufgegebener Tracerionen. Zudem zeigen die im Ablauf gewonnen Fraktionen eine eindeutige Abhängigkeit der Größe der enthaltenen Partikel von der Retentionszeit. Aufgrund der breiten Partikelgrößenverteilung in der Aufgabeprobe und der unzureichenden Trenneffizienz des Versuchsaufbaus der Vorversuche kommt es zu keiner vollständigen Fraktionierung. Die Versuche zeigen aber das Potential des Ansatzes zur Fraktionierung magnetischer Feinstpartikeln aufgrund unterschiedlicher Retentionszeiten bei der Durchströmung magnetischer Trennsäulen (siehe **Fig.4**)

**Fig.4** zeigt in einem Diagramm eine Darstellung der Erhöhung der Retentionszeit magnetischer Feinstpartikeln in einer magnetfeldüberlagerten Trennsäule (proportional zum dargestellten Retentionsvolumen V in [mL]) durch einen Vergleich der Retentionszeiten (Retentionsvolumnia) von mit der Probe aufgegebenen Tracerionen **31** und der Feinstpartikel **32** im Größenbereich von 50 - 200 nm. Aufgetragen sind die Kurvenverläufe für die Feinstpartikel sichtbar im UV-Licht-Signal in [mAU] sowie für die mit der Probe aufgegebenen Tracerionen sichtbar im Leifähigkeitssignal $\kappa$ in [mS/cm] über dem Retentionsvolumen V in [mL].

**Literatur:**

[1] Seidel-Morgensteren A et al.: New Developments in Simulated Moving Bed Chromatography; Chem. Eng. Technol. 2008, 31 No. 6, S. 826-837

**Bezugszeichenliste:**

| 1 | Verbindungsleitungen |
|---|---|
| 2 | Durchströmungsrichtung |
| 3 | Trennsäule |
| 4 | Magnetfeldquelle |
| 5 | Zulauf |
| 6 | Einmündung für eine aufzutrennende Feinstpartikelsuspension |
| 7 | Einmündung für mindestens eine zusätzliche mobile Phase |
| 8 | Ablauf |
| 9 | Ausmündung für eine erste Ablaufsuspension |
| 10 | Ausmündung für eine zweite Ablaufsuspension |
| 11 | Verteilerleitung für die aufzutrennende Feinstpartikelsuspension |
| 12 | Verteilerleitung für die zusätzliche mobile Phase |
| 13 | Sammelleitung für erste Ablaufsuspension |
| 14 | Sammelleitung für zweite Ablaufsuspension |
| 15 | Absperrventil für die Einmündung 6 |
| 16 | Absperrventil für die Einmündung 7 |
| 17 | Absperrventil für die Einmündung 9 |
| 18 | Absperrventil für die Einmündung 10 |
| 19 | Förderpumpe für Verteilerleitung 11 |
| 20 | Förderpumpe für Verteilerleitung 12 |
| 21 | Vorfilter für Verteilerleitung 11 |
| 22 | Vorfilter für Verteilerleitung 12 |
| 23 | auf Durchlassschaltstellung geschalteten Ausmündung für die zweite Ablaufsuspension |
| 24 | auf Durchlassschaltstellung geschalteten Einmündung für die aufzutrennende Feinstpartikelsuspension |
| 25 | auf Durchlassschaltstellung geschaltete Ausmündung für die erste Ablaufsuspension |
| 26 | auf Durchlassschaltstellung geschalteten Einmündung für die zusätzliche mobile Phase |
| 27 | zusätzliche Verbindungsleitung |
| 28 | Förderpumpe für Fluidkreislauf in Durchströmungsrichtung 2 |
| 29 | Polizeifilter |
| 30 | Absperrventil |
| 31 | Retentionszeiten von mit der Probe aufgegebenen Tracerionen |
| 32 | Retentionszeiten der Feinstpartikel |

**Patentansprüche**

1. Vorrichtung zur selektiven Fraktionierung von Feinstpartikeln, umfassend

   a) mindestens drei fluidisch durch Verbindungsleitungen **(1)** in Reihe verbundenen und in einer vorgegebenen Durchströmungsrichtung **(2)** durchströmbarer Trennsäulen **(3)**,
   b) mindestens einen vor jeder Trennsäule liegenden Zulauf **(5)** in die Verbindungsleitung mit jeweils mindestens zwei alternativ betriebenen Einmündungen **(6, 7)** für eine aufzutrennende Feinstpartikelsuspension sowie mindestens eine zusätzliche mobile Phase,

c) mindestens einen nach jeder Trennsäule aus der Verbindungsleitung abzweigenden Ablauf **(8)** mit jeweils mindestens zwei alternativ betreibbaren Ausmündungen **(9, 10)** für je eine Suspension aus Feinstpartikeln, wobei die Feinstpartikel der ersten Ablaufsuspension eine stärkere Wechselwirkung mit der Packung der Trennsäule aufweisen als die Feinstpartikel einer zweiten Ablaufsuspension,

d) Absperrventile **(15, 16, 17, 18)** mit jeweils zwei Schaltstellungen, einer Sperrschaltstellung und einer Durchlassschaltstellung, an jeder Ein- und Ausmündung sowie

e) Ansteuerungsmittel für eine simultane Umschaltung der Durchlassschaltstellungen der Absperrventile der Einmündungen sowie der Ausmündungen, wobei jeweils mindestens eine Einmündung und mindestens eine Ausmündung für die aufzutrennende Feinstpartikelsuspension, der mindestens einen zusätzlichen mobilen Phase sowie der mindestens zwei Ablaufsuspensionen aus Feinstpartikeln auf Durchlassschaltstellung schaltbar sind,

wobei

f) zwischen der auf Durchlassschaltstellung geschalteten Ausmündung für die zweite Ablaufsuspension aus Feinstpartikel und der stromaufwärts zu dieser auf Durchlassschaltstellung geschalteten Einmündung für die aufzutrennende Feinstpartikelsuspension mindestens eine Trennsäule angeordnet ist,

g) zwischen der auf Durchlassschaltstellung geschaltete Ausmündung für die erste Ablaufsuspension aus Feinstpartikel und der stromabwärts zu dieser auf Durchlassschaltstellung geschaltete Einmündung für eine aufzutrennende Feinstpartikelsuspension mindestens eine Trennsäule angeordnet ist, sowie

h) zwischen der auf Durchlassschaltstellung geschaltete Ausmündung für die erste Ablaufsuspension aus Feinstpartikel und der stromaufwärts zu dieser auf Durchlassschaltstellung geschalteten Einmündung für eine zusätzliche zusätzliche mobile Phase mindestens eine Trennsäule angeordnet ist,

**dadurch gekennzeichnet, dass**

i) mindestens eine Magnetfeldquelle **(4)** für je ein Magnetfeld in jeder Trennsäule **(3)** vorgesehen ist.

2. Vorrichtung nach Anspruch 1, **dadurch gekennzeichnet, dass** die Trennsäulen **(3)** jeweils eine durchströmbare Matrix, vorzugsweise eine durchströmbare Festbettschüttung aus unporösen Füllkörpern oder Drähte ein magnetisierbares Material umfassend aufweisen.

3. Vorrichtung nach Anspruch 2, **dadurch gekennzeichnet, dass** die Füllkörper eine Sättigungsmagnetisierung größer gleich 1 A·m$^2$/kg aufweisen.

4. Vorrichtung nach Anspruch 2 oder 3, **dadurch gekennzeichnet, dass** die Füllkörper in jeder Trennsäule und/oder die Trennsäulen gleich sind.

5. Vorrichtung nach einem der vorgenannten Ansprüche, **dadurch gekennzeichnet, dass** jede Trennsäule jeweils eine Magnetfeldquelle aufweist.

6. Vorrichtung nach einem der vorgenannten Ansprüche, **dadurch gekennzeichnet, dass** die mindestens eine Magnetfeldquelle mindestens einen Permanentmagneten umfasst.

7. Vorrichtung nach einem der vorgenannten Ansprüche, **dadurch gekennzeichnet, dass** die mindestens eine ,Magnetfeldquelle mindestens eine elektromagnetische Spule umfasst.

8. Vorrichtung nach einem der vorgenannten Ansprüche 2 bis 7, **dadurch gekennzeichnet, dass** die mindestens eine Magnetfeldquelle die permanentmagnetische Füllkörper umfasst.

9. Vorrichtung nach Anspruch 8, **dadurch gekennzeichnet, dass** die Magnetfelder in ihren Magnetfeldstärken durch die Ansteuerungsmittel ansteuerbar und veränderbar sind.

10. Vorrichtung nach Anspruch 8 oder 9, **dadurch gekennzeichnet, dass** die Magnetfeldstärken einen zyklischen Verlauf einnehmen.

11. Vorrichtung nach einem der vorgenannten Ansprüche, **dadurch gekennzeichnet, dass** die mindestens drei fluidisch durch Verbindungsleitungen in Reihe verbundenen Trennsäulen als Ring zu einem Kreislauf verschaltet sind.

12. Verfahren zur selektiven Fraktionierung von Feinstpartikeln, umfassend die folgenden Verfahrensschritte:

a) Bereitstellung einer Vorrichtung nach einem der vorgenannten Ansprüche, einer flüssigen mobilen Phase sowie der aufzutrennenden Feinstpartikelsuspension,

b) Serielles Durchleiten der flüssigen mobilen Phase durch die Trennsäulen in Durchströmungsrichtung,

c) Aktivierung der Magnetfelder in mindestens einer der Trennsäulen,

d) Einleiten der aufzutrennenden Feinstpartikelsuspension über den Einlass in die Verbindungsleitung zwischen zwei Trennsäulen,

e) simultane zyklische Schaltung der Durchlassschaltstellungen der Absperrventile der Einmündungen sowie der Ausmündungen,

f) wobei jeweils mindestens eine Einmündung für die Feinstpartikelsuspension und die mobile Phase und je mindestens eine Ausmündung für die mindestens zwei Ablaufsuspensionen aus Feinstpartikeln, wobei die Feinstpartikel der ersten Ablaufsuspension eine stärkere Wechselwirkung mit der Packung der Trennsäule aufweisen als die Feinstpartikel einer zweiten Ablaufsuspension, zugleich auf Durchlassschaltstellung schaltbar ist,

g) wobei zwischen der auf Durchlassschaltstellung geschaltete Ausmündung für die zweite Ablaufsuspension aus Feinstpartikel und der stromaufwärts zu dieser auf Durchlassschaltstellung geschaltete Einmündung für die aufzutrennende Feinstpartikelsuspension mindestens eine Trennsäule angeordnet ist, zwischen der auf Durchlassschaltstellung geschalteten Ausmündung für die erste Ablaufsuspension aus Feinstpartikel und der stromabwärts zu dieser auf Durchlassschaltstellung geschaltete Einmündung für die aufzutrennende Feinstpartikelsuspension mindestens eine Trennsäule angeordnet ist, sowie

h) zwischen der auf Durchlassschaltstellung geschaltete Ausmündung für die erste Ablaufsuspension aus Feinstpartikel und der stromaufwärts zu dieser auf Durchlassschaltstellung geschaltete Einmündung für die mobile Phase mindestens eine Trennsäule angeordnet ist.

13. Verfahren nach Anspruch 12, **dadurch gekennzeichnet, dass** die die Magnetfelder in ihren Magnetfeldstärken durch die Ansteuerungsmittel ansteuerbar und veränderbar sind.

14. Verfahren nach Anspruch 12 oder 13, **dadurch gekennzeichnet, dass** die aufzutrennende Feinstpartikelsuspension dia- oder paramagnetischen Feinstpartikel und eine stärker als die Feinstpartikel paramagnetische Lösung oder ein Ferrofluid als Flüssigkeit umfasst.

15. Verfahren nach Anspruch 12 oder 13, **dadurch gekennzeichnet, dass** die aufzutrennende Feinstpartikelsuspension ferro-, ferri- oder paramagnetische Feinstpartikel und eine schwächer als die Feinstpartikel paramagnetische öder diamagnetische Lösung als Flüssigkeit umfasst.

16. Verfahren nach einem der Ansprüche 12 bis 14, **dadurch gekennzeichnet, dass** die Feinstpartikel eine Partikelgröße zwischen 1nm und 20$\mu$m, vorzugsweise zwischen 10nm und 5$\mu$m aufweisen.

**Claims**

1. Device for the selective fractionation of ultrafine particles, comprising

a) at least three through-flowable separating columns (3), fluidically connected in series by connecting lines (1) and in a predetermined flow direction (2),

b) at least one feed (5) into the connecting line, located upstream of each separating column, with in each case at least two alternately operated inlets (6, 7) for an ultrafine particle suspension that is to be separated, as well as at least one additional mobile phase,

c) at least one discharge (8) branching off from the connecting line, downstream of each separating column, with in each case two alternately operated outlets (9, 10), each one for a suspension of ultrafine particles, wherein the ultrafine particles of the first discharge suspension exhibit a more powerful reciprocal effect with the packing of the separating column than the ultrafine particles of a second discharge suspension,

d) shut-off valves (15, 16, 17, 18) with in each case two switching positions, a blocking switching position and a throughflow switching position, at each inlet and outlet,
and

e) control means for simultaneous switching of the throughflow positions of the shutoff valves of the inlets and of the outlets, wherein in each case at least one inlet and at least one outlet for the ultrafine particle suspension which is to be separated, of the at least one additional mobile phase and of the at least two discharge suspensions of ultrafine particles, can be switched to the throughflow position,
wherein

f) at least one separating column is arranged between the outlet switched to the throughflow position for the second discharge suspension of ultrafine particles and the inlet, upstream of this and switched to the throughflow position for the ultrafine particle suspension which is to be separated,

g) at least one separating column is arranged between the outlet for the first discharge suspension of ultrafine particles, switched to the throughflow position, and the inlet downstream of this and switched to the throughflow position, for an ultrafine particle suspension which is to be separated, and

h) at least one separating column is arranged between the outlet for the first discharge suspension of ultrafine particles, switched to the throughflow position, and the inlet upstream of this, switched to the throughflow position, for an additional mobile phase,

**characterised in that**

i) at least one magnetic field source (4) is provided in each case for a magnetic field in each separating column (3).

2. Device according to claim 1, **characterised in that** the separating columns (3) in each case comprise a through-flowable matrix, preferably a through-flowable fixed-bed filling of non-porous filling bodies or wires, and comprising a magnetisable material.

3. Device according to claim 2, **characterised in that** the filling bodies exhibit a saturation magnetisation greater than or equal to 1 A.m$^2$/kg.

4. Device according to claim 2 or 3, **characterised in that** the filling bodies in each separating column and/or the separating columns are the same.

5. Device according to any one of the preceding claims, **characterised in that** each separating column in each case comprises a magnetic field source.

6. Device according to any one of the preceding claims, **characterised in that** the at least one magnetic field source comprises at least one permanent magnet.

7. Device according to any one of the preceding claims, **characterised in that** the at least one magnetic field source comprises at least one electromagnetic coil.

8. Device according to any one of the preceding claims 2 to 7, **characterised in that** the at least one magnetic field source comprises the permanently magnetic filling bodies.

9. Device according to claim 8, **characterised in that** the magnetic fields can be controlled and changed in their magnetic field strengths by the control means.

10. Device according to claim 8 or 9, **characterised in that** the magnetic field strengths adopt a cyclic course.

11. Device according to any one of the preceding claims, **characterised in that** the at least three separating columns fluidically connected in series by connecting lines are connected as a ring to form a circuit.

12. Method for the selective fractionation of ultrafine particles, comprising the following method steps:

a) Provision of a device according to any one of the preceding claims, of a fluid mobile phase, and of the ultrafine particle suspension that is to be separated,

b) serial conveying of the fluid mobile phase through the separating columns in the throughflow direction,

c) activation of the magnetic fields in at least one of the separating columns.

d) introduction of the ultrafine particle suspension that is to be separated via the feed into the connecting line between two separating columns,

e) simultaneous cyclic switching of the throughflow positions of the shut-off valves of the inlets and of the outlets,

f) wherein in each case at least one inlet for the ultrafine particle suspension and the mobile phase and in each case at least one outlet for the at least two discharge suspensions of ultrafine particles are provided, wherein the ultrafine particles of the first discharge suspension exhibit a more powerful reciprocal effect with the packing of the separating column than the ultrafine particles of a second discharge suspension, and at the same time can be switched to the through-flow position,

g) wherein at least one separating column is arranged between the outlet for the second discharge suspension of ultrafine particles, switched to the throughflow position, and the inlet, upstream of this, switched to the through-

flow position, for the ultrafine particle suspension that is to be separated, and at least one separating column is arranged between the outlet for the first discharge suspension of ultrafine particles and the inlet, downstream of this, for the ultrafine particle suspension that is to be separated, switched to the throughflow position, and

h) at least one separating column is arranged between the outlet, switched to the throughflow position, for the first discharge suspension of ultrafine particles and the inlet, upstream of this, switched to the throughflow position, for the mobile phase.

13. Method according to claim 12, **characterised in that** the magnetic fields can be controlled and altered in their magnetic field strengths by the control means.

14. Method according to claim 12 or 13, **characterised in that** the ultrafine particle suspension that is to be separated comprises diamagnetic or paramagnetic ultrafine particles, and a paramagnetic solution more powerful than the ultrafine particles or a ferrofluid as the fluid.

15. Method according to claim 12 or 13, **characterised in that** the ultrafine particle suspension that is to be separated comprises as the fluid ferromagnetic, ferromagnetic, or paramagnetic ultrafine particles and a paramagnetic or diamagnetic solution which is weaker than the ultrafine particles.

16. Method according to any one of claims 12 to 14, **characterised in that** the ultrafine particles exhibit a particle size of between 1nm and 20μm, preferably between 10nm and 5μm.

**Revendications**

1. Dispositif de fractionnement sélectif de particules ultra fines comprenant :

a) au moins trois colonnes à fractionner (3) reliées fluidiquement en série par trois conduites de liaison (1) et traversées selon une direction de passage (2), prédéfinie,
b) au moins une arrivée (5) en amont de chaque colonne à fractionner dans la conduite de liaison avec chacune au moins deux entrées (6, 7) fonctionnant en alternance pour une suspension de particules ultra fines à séparer ainsi qu'au moins une phase mobile supplémentaire,
c) au moins un départ (8) dérivant de la conduite de liaison en aval de chaque colonne à fractionner avec au moins deux sorties (9, 10) fonctionnant en alternance chacune pour une suspension de particules ultra fines, les particules ultra fines de la première suspension de départ ayant une interaction plus forte avec la garniture de la colonne à fractionner que les particules ultra fines d'une seconde suspension de départ,
d) des vannes d'arrêt (15, 16, 17, 18) ayant chacune deux positions de commutation, une position fermée et une position ouverte sur chaque entrée et chaque sortie,
e) des moyens de commande pour commuter simultanément la position ouverte des vannes d'arrêt des entrées et des sorties, avec respectivement au moins une entrée et au moins une sortie étant commutées en position ouverte pour la suspension de particules ultra fines à séparer, au moins de la phase mobile supplémentaire et au moins deux suspensions de départ de particules ultra fines,
dans lequel
f) au moins une colonne à fractionner est prévue entre la sortie commutée en position ouverte pour la seconde suspension de départ de particules ultra fines et l'entrée commutée en position ouverte, en amont, pour la suspension de particules ultra fines à fractionner,
g) au moins une colonne à fractionner est prévue entre la sortie commutée en position ouverte pour la première suspension de départ de particules ultra fines et l'entrée commutée en position ouverte, en aval de celle-ci pour la suspension de particules ultra fines à fractionner, et
h) au moins une colonne à fractionner est prévue entre la sortie commutée en position ouverte pour la première suspension de départ de particules ultra fines et l'entrée commutée en position ouverte, en amont de celle-ci, pour une phase mobile supplémentaire,
dispositif **caractérisé en ce que**
i) au moins une source de champ magnétique (4) pour un champ magnétique respectif est prévu dans chaque colonne à fractionner (3).

2. Dispositif selon la revendication 1,
**caractérisé en ce que**
les colonnes à fractionner (3) ont respectivement une matrice traversée par le flux, de préférence un lit solide traversé par un flux, formé d'éléments de garniture non poreux ou de fils en une matière aimantable.

3.  Dispositif selon la revendication 2,
    **caractérisé en ce que**
    les éléments de garniture ont une aimantation de saturation supérieure ou égale à 1 A.m$^2$/kg.

4.  Dispositif selon la revendication 2 ou 3,
    **caractérisé en ce que**
    les éléments de garniture de chaque colonne à fractionner et/ou les colonnes à fractionner sont identiques.

5.  Dispositif selon l'une des revendications précédentes,
    **caractérisé en ce que**
    chaque colonne à fractionner comporte une source de champ magnétique.

6.  Dispositif selon l'une des revendications précédentes,
    **caractérisé en ce que**
    au moins une source de champ magnétique comprend un aimant permanent.

7.  Dispositif selon l'une des revendications précédentes,
    **caractérisé en ce que**
    au moins une source de champ magnétique comprend au moins une bobine électro-magnétique.

8.  Dispositif selon l'une des revendications précédentes 2 à 7,
    **caractérisé en ce que**
    au moins une source de champ magnétique comprend les éléments de garniture à aimantation permanente.

9.  Dispositif selon la revendication 8,
    **caractérisé en ce que**
    les champs magnétiques ont une intensité de champ magnétique commandée et modifiée par le moyen de commande.

10. Dispositif selon la revendication 8 ou 9,
    **caractérisé en ce que**
    les intensités de champ magnétique ont une évolution cyclique.

11. Dispositif selon l'une des revendications précédentes,
    **caractérisé en ce que**
    au moins trois colonnes à fractionner reliées en séries de manière fluidique par des conduites de liaison sont branchées en boucle pour former un circuit.

12. Procédé de fractionnement, sélectif de particules ultra fines comprenant les étapes suivantes consistant à :

    a) fournir un dispositif selon l'une quelconque des revendications précédentes, une phase mobile fluide ainsi que la suspension de particules ultra fines à séparer,
    b) faire passer en série, la phase mobile fluide à travers les colonnes à fractionner dans la direction de passage,
    c) activer les champs magnétiques dans au moins l'une des colonnes à fractionner,
    d) introduire la suspension de particules ultra fines à fractionner par l'introduction dans la conduite de liaison entre deux colonnes à fractionner,
    e) commuter cycliquement de façon simultanée, les positions ouvertes des vannes d'arrêt des entrées et des sorties,
    selon lequel
    f) chaque fois au moins une entrée pour la suspension de particules ultra fines et la phase mobile et chaque fois au moins une sortie pour les deux suspensions de départ de particules ultra fines, en étant commutés en même temps sur la position ouverte, les particules ultra fines de la première suspension de départ ayant une interaction plus forte avec la garniture de la colonne à fractionner que les particules ultra fines d'une seconde suspension de départ,
    g) au moins une colonne à fractionner étant prévue entre la sortie commutée sur la position ouverte pour la seconde suspension de départ de particules ultra fines et en amont de celle-ci, l'entrée commutée sur la position ouverte pour la suspension de particules ultra fines à fractionner,
entre au moins une colonne à fractionner est prévue la sortie commutée sur la position ouverte pour la première suspension de départ de particules ultra fines et l'entrée en amont commutée sur la position ouverte pour la suspension de particules ultra fines à séparer, et

h) au moins une colonne à fractionner est prévue entre la sortie commutée sur la position ouverte pour la première suspension de départ de particules ultra fines et l'entrée commutée sur la position ouverte pour la phase mobile.

**13.** Procédé selon la revendication 12,
**caractérisé en ce que**
on commande et on modifie l'intensité des champs magnétiques avec le moyen de commande.

**14.** Procédé selon la revendication 12 ou 13,
**caractérisé en ce que**
la suspension de particules ultra fines à fractionner comprend des particules ultra fines diamagnétiques ou paramagnétiques et le fluide comprend une solution paramagnétique ou un fluide ferromagnétique plus fort que les particules ultra fines.

**15.** Procédé selon la revendication 12 ou 13,
**caractérisé en ce que**
la suspension de particules ultra fines à séparer contient des particules ferromagnétiques, ferrimagnétiques ou paramagnétiques et comme fluide, une solution paramagnétique ou diamagnétique plus faible que les particules ultra fines.

**16.** Procédé selon l'une des revendications 12 à 14,
**caractérisé en ce que**
les particules ultra fines ont une taille de particules comprises entre 1nm et 20$\mu$m de préférence entre 10nm et 5$\mu$m.

Fig. 1

# Fig. 2

Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154178 A1
- WO 2017199031 A1
- WO 2005113101 A2

**In der Beschreibung aufgeführte Nicht-Patentliteratur**

- **SEIDEL-MORGENSTEREN A et al.** New Developments in Simulated Moving Bed Chromatography. *Chem. Eng. Technol.,* 2008, vol. 31 (6), 826-837